# EUROPEAN PATENT APPLICATION

(11) **EP 1 501 293 A2**
(43) Date of publication of application: **26.01.2005**
(21) Application number: 04015894.1
(22) Date of filing: 06.07.2004
(51) Int. Cl.: H04N 5/782

(54) **Data recording and reproducing apparatus displaying information about recording reservations**

(30) Priority: 24.07.2003 JP 2003201307
(71) Applicant: Funai Electric Co., Ltd., Daito-shi, Osaka (JP)
(72) Inventor: Kobayashi, Hideo, c/o Funai Electric Co., Ltd., Daito-shi, Osaka (JP)
(74) Representative: Grünecker, Kinkeldey, Stockmair & Schwanhäusser Anwaltssozietät

(57) **Abstract**

Information recording and reproducing apparatus (100) includes an OSD (On Screen Display) image generating circuit (20) displaying, in response to an input from an operation unit (2), a plurality of rectangular regions in the form of a matrix according to configurational information, the rectangular regions being correlated with respective dates and recording times. In a recording reservation mode, the information recording and reproducing apparatus (100) selects one of the rectangular regions on a menu screen in response to an input from the operation unit (2). According to an input channel as well as the date and recording time corresponding to the selected rectangular region, the information recording and reproducing apparatus (100) generates reservation data and registers the data on a recording table.

## Description

### BACKGROUND OF THE INVENTION

### Field of the Invention

The present invention relates to a data recording and reproducing apparatus for recording and reproducing television broadcasts and having the function of making recording reservations. In particular, the present invention relates to display of information about recording reservations.

### Description of the Background Art

With a conventional data recording and reproducing apparatus having the function of making recording reservations, a user can make a recording reservation by designating at least the recording start time, the recording finish time (or duration of the recording) as well as the channel of a television broadcast to be recorded.

Further, there is a recording reservation apparatus with which a recording reservation can be made using recording information at the time of making the reservation that is displayed on a television monitor.

Regarding the recording reservation apparatus, a first conventional example has a known structure as detailed below with which recordings can easily be handled (see Japanese Patent Laying-Open No. 10-112087).

As to the first conventional example, television radio waves from an antenna are converted into an image signal via the recording reservation apparatus and then supplied to a television monitor. Specifically, the television radio waves are supplied to a tuner of the recording reservation apparatus. A radio wave selected from a plurality of radio waves and then amplified is converted into the image signal. The image signal is supplied to a storage medium and a switch. According to a command provided via a remote-control photoreceptor, a microcontroller controls the tuner, storage medium, switch and a display controller. The display controller outputs a signal for displaying on the television monitor a recording reservation calendar for example. An adder superimposes this signal and the image signal on each other. The signal resultant from the superimposition is supplied to the television monitor.

A second conventional example is an image processing apparatus for simply making a recording reservation for a program that has a known structure as detailed below (see Japanese Patent Laying-Open No. 2000-278639).

As to the second conventional example, programs having been recorded, a program now being recorded and programs for which reservations have been made are displayed on respective time frames on respective regions indicated on a calendar. The user moves a cursor to select and reproduce a desired program. Further, the user moves the cursor to a desired time frame to reserve a recording of a desired program. In order to make reservations for recordings in the same time frames over certain days, the cursor may be moved while a predetermined button is simultaneously pressed so that recording reservations are made.

For users, however, it is complicated and difficult to make reservations for recordings by designating the recording start time, recording finish time and recording channel. It is also difficult for a user who is going to reproduce or erase a recorded program to determine the date and channel of the program or determine whether the user has already watched the program.

### SUMMARY OF THE INVENTION

An object of the present invention is to provide a data recording and reproducing apparatus with which a reservation for a recording of a program can easily be made.

Another object of the present invention is to provide a data recording and reproducing apparatus with which a recorded program can easily be reproduced.

Still another object of the present invention is to provide a data recording and reproducing apparatus with which a recorded program can easily be erased.

According to an aspect of the present invention, a data recording and reproducing apparatus includes a receiving unit receiving program data of a channel, a storage unit storing information about a recording operation and a reproducing operation, an input unit receiving an externally input instruction, a clock unit measuring date and time, and a control unit controlling the recording operation and the reproducing operation. The storage unit includes a circuit storing, in a predetermined operation mode, configurational information for configuring a display image of a plurality of regions in a predetermined shape displayed in a matrix form on a menu screen, and a recording table having reservation data registered thereon. The control unit includes a display image generating circuit generating, in response to an input from the input unit, a signal for displaying those regions in the predetermined shape in the matrix form on the menu screen according to the configurational information, the regions being correlated with respective dates and times ranging from predetermined date and time in the past to predetermined date and time in the future. The control unit further includes a circuit selecting, in the predetermined operation mode, in response to an input from the input unit, one of the regions in the predetermined shape on the menu screen, a circuit generating, in response to an input of a channel from the input unit, the reservation data according to the selected region in the predetermined shape so that the reservation data includes recording time and date correlated with the selected region in the predetermined shape, the input channel and program data of the channel, and registering the generated reservation data on the recording table, a circuit issuing an instruction to record, on the storage unit, the program data of the input channel included in the reservation data when the measured date and time match the recording date and time included in the reservation data, and a circuit issuing, in the predetermined operation mode, in response to an input from the operation unit, an instruction to reproduce from the storage unit the recorded program data included in the reservation data generated according to the selected region in the predetermined shape on the menu screen.

According to another aspect of the present invention, a data recording and reproducing apparatus having recording reservation mode as an operation mode includes a receiving unit receiving program data of a channel, an input unit receiving an externally input instruction, a clock unit measuring date and time, a storage unit storing information about an operation of the data recording and reproducing apparatus. The storage unit includes a circuit storing, in the recording reservation mode, configurational information for configuring a display image of a plurality of regions in a predetermined shape displayed in a matrix form on a menu screen, and a recording table having reservation data registered thereon. The data recording and reproducing apparatus further includes a control unit controlling the operation of the data recording and reproducing apparatus. The control unit includes a display image generating circuit generating, in response to an input from the input unit, a signal for displaying the regions in the predetermined shape in the matrix form on the menu screen according to the configurational information, those regions being correlated with respective dates and times, a circuit selecting, in the recording reservation mode, in response to an input from the input unit, one of the regions in the predetermined shape on the menu screen, a circuit generating, in response to an input of a channel from the input unit, the reservation data according to the selected region in the predetermined shape so that the reservation data includes recording time and date correlated with the selected region in the predetermined shape, the input channel and program data of the channel, and registering the generated reservation data on the recording table, and a circuit issuing an instruction to record, on the storage unit, the program data received by the reception unit when the date and time measured by the clock unit match the recording date and time included in the reservation data.

Preferably, the display image generating circuit includes a circuit correlating columns or rows of the matrix of the regions in the predetermined shape with respective times starting from a set time at predetermined first time intervals, and the control unit further includes a circuit allowing, in response to an input from the input unit, a reservation to be set at predetermined second time intervals shorter than the predetermined first time intervals.

Preferably, the storage unit includes a first storage circuit storing the configurational information and the recording table, and a second storage circuit storing the program data.

Preferably, the dates and times correlated respectively with the regions in the predetermined shape include dates and times ranging from predetermined date and time in the past to predetermined date and time in the future, and the control unit further includes a reproduction circuit reproducing, in response to an input from the input unit, the recorded program data included in the reservation data generated according to the selected region in the predetermined shape on the menu screen.

Preferably, the control unit further includes a circuit erasing, when a predetermined time has passed from the recording date and time included in the reservation data to time and date measured by the clock unit, the reservation data and the program data included in the reservation data.

Preferably, the reservation data includes a reproduction flag indicating whether or not reproduction is done, and the control circuit further includes a circuit changing, when the program data is reproduced by the reproduction circuit, the reproduction flag included in the reservation data including the reproduced program data, and a circuit changing, in the recording reservation mode, based on the date and time measured by the clock unit and the reproduction flag, a display color of the region in the predetermined shape on the menu screen according to which the reservation data is generated.

Preferably, the display image generating circuit includes a circuit correlating a day of a week corresponding to the date and time measured by the clock unit with one of a central row and a central column of the regions in the predetermined shape displayed in the matrix form.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a functional block diagram illustrating a configuration of an information recording and reproducing apparatus as an exemplary data recording and reproducing apparatus of the present invention.
Figs. 2 and 3 each show a menu screen in a recording reservation mode of simple recording reservation.
Fig. 4 shows a management table in the form of a matrix corresponding to a plurality of rectangular regions displayed on the menu screen of the simple recording reservation.
Fig. 5 shows a simple recording table generated in the recording reservation mode of the simple recording reservation.
Fig. 6 shows a data table of recording files recorded in respective recording reservation modes of simple recording reservation and normal recording reservation.
Figs. 7-9 show a flowchart of an operation of displaying a menu screen of the simple recording reservation in response to an operation signal effected by an instruction to display that is entered by a user.
Figs. 10 and 11 show a flowchart of an operation of making a recording reservation with the menu screen of the simple recording reservation according to an operation signal effected by a user.
Figs. 12 and 13 show a flowchart of an operation of erasing a recording file recorded two weeks ago among recording files recorded in the simple recording reservation mode.

### DESCRIPTION OF THE PREFERRED EMBODIMENTS

An embodiment of the present invention is hereinafter described in detail with reference to the drawings. It is noted that like components are herein denoted by like reference characters, named identically and function identically. Therefore, the detailed description thereof will not be repeated.

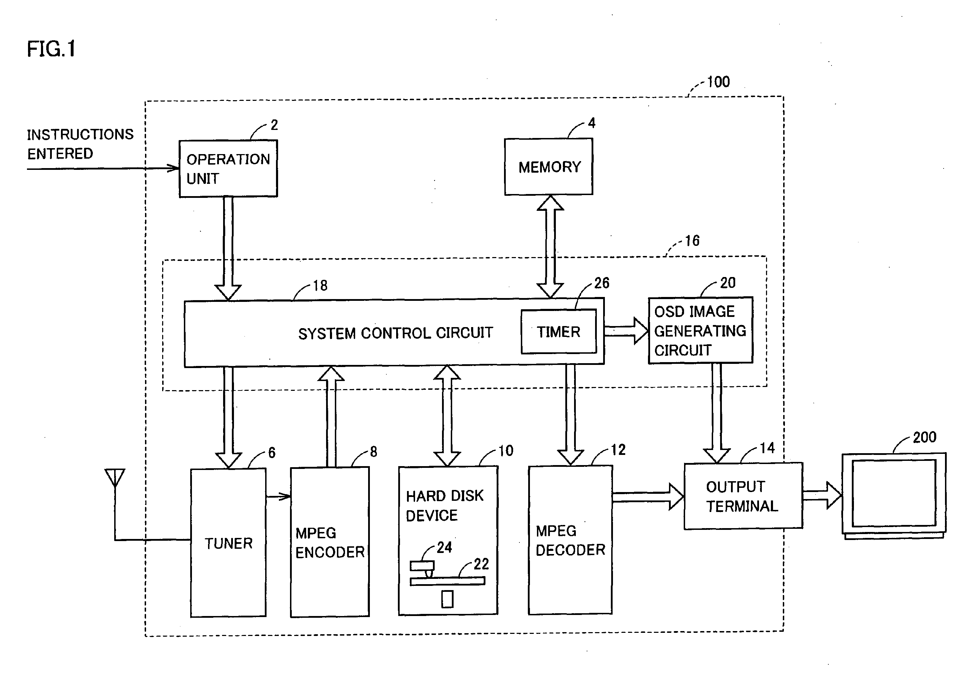

Referring to Fig. 1, an information recording and reproducing apparatus 100 includes an operation unit 2 receiving instructions entered by a user, a tuner 6 for receiving analog television signals (hereinafter referred to as TV signals) included in a television broadcast, an MPEG (Moving Picture Expert Group) encoder 8 for encoding the TV signals supplied from tuner 6 into moving image digital data (hereinafter referred to as moving image data), a hard disk device 10 for storing the moving image data, an MPEG decoder 12 for decoding the moving image data into TV signals, an output terminal 14 for connecting to external equipment, a control unit 16 for controlling the operation of information recording and reproducing apparatus 100, and a nonvolatile memory 4 for writing and reading data. The TV signals include at least an image signal. When the signals received by tuner 6 are digital signals, the encoding by MPEG encoder 8 may be dispensed with.

Control unit 16 includes a system control circuit 18 having a timer 26 for measuring time and includes an OSD (On Screen Display) image generating circuit 20 for generating a menu screen. Memory 4 may be included within system control circuit 18. The time measured by timer 26 may be displayed on a display (not shown) provided on the casing of information recording and reproducing apparatus 100. Further, the time measured by timer 26 may be output via output terminal 14 to external equipment in the form of a time display image generated by OSD image generating circuit 20.

Hard disk device 10 includes a hard disk 22 and a recording and reproducing head 24 for writing data onto and reading data from hard disk 22. Hard disk 22 stores a plurality of coded frame data corresponding respectively to a plurality of frames to be reproduced along a time axis of moving image data. The stored coded frame data are correlated with respective addresses.

The function of information recording and reproducing apparatus 100 in the embodiment of the present invention is not particularly limited to storing of moving image data on hard disk device 10. Information recording and reproducing apparatus 100 may store moving image data on a detachable recording medium. The detachable recording medium may be DVD (Digital Versatile Disc) for example. The detachable recording medium may alternatively be such a nonvolatile memory card as SD (Secure Digital) card.

An operation of information recording and reproducing apparatus 100 according to the embodiment of the present invention is now described.

A user performs various operations by means of operation unit 2. Then, system control circuit 18 controls the operation of information recording and reproducing apparatus 100 based on the various operations.

"Various operations" for example refer to the operation of designating a channel (hereinafter referred to as CH), the operation of making a recording reservation, the operation of designating a recorded program, the operation of instructing to record, the operation of instructing to reproduce, the operation of stopping recording, the operation of stopping reproduction, and the operation of erasing a recorded program.

Operation unit 2 provides various operation signals to system control circuit 18 according to the user's operations. Operation unit 2 may be a remote controller (not shown) separated from information recording and reproducing apparatus 100.

When an instruction to change the channel is entered by a user to operation unit 2, system control circuit 18 supplies to tuner 6 a CH designation signal of the analog television broadcast (NTSC (National Television Standards Committee) system, PAL (Phase Alternation by Line) system or SECAM (SEquential Couleur A Memoire) system for example. Tuner 6 then receives analog television broadcast waves corresponding to the designated CH. Tuner 6 supplies a TV signal obtained by demodulating the television broadcast waves to MPEG encoder 8. MPEG encoder 8 performs MPEG coding on the TV signal based on an encode control signal of system control circuit 18. The MPEG-coded TV signal is converted into moving image data. System control circuit 18 writes the moving image data on hard disk device 10. Hard disk device 10 writes the moving image data and reads written moving image data with a read control signal of system control circuit 18. MPEG decoder 12 performs MPEG decoding on the read moving image data based on a decode control signal of system control circuit 18. The MPEG-decoded moving image data is converted into a TV signal. The resultant TV signal is output via output terminal 14 to external equipment. The external equipment is not particularly limited to any device and may be a display device 200 for example.

OSD image generating circuit 20 generates an information display image for displaying an image according to various information display signals supplied from system control circuit 18. The generated information display image is output in the form of an image signal to the outside via output terminal 14. For example, the information display image includes a menu screen with which a user makes a recording reservation for a program.

Display device 200 displays the information display image generated by OSD image generating circuit 20 based on the image signal output from output terminal 14.

Information recording and reproducing apparatus 100 has an operation mode which is recording reservation mode in which the menu screen with which a user makes a recording reservation is output in the form of an image signal to be displayed on display device 200.

A description is given below of the menu screen which is output in the recording reservation mode of information recording and reproducing apparatus 100 according to the embodiment of the present invention.

According to an operation signal for displaying the recording reservation menu screen that is effected by an operation of a user on operation unit 2, system control circuit 18 directs OSD image generating circuit 20 to generate the menu screen for making a recording reservation. As to the type of the program recording reservation mode, the recording reservation mode includes simple recording reservation and normal recording reservation.

"Normal recording reservation" refers to a recording reservation mode in which a user can make a recording reservation by directly entering at least the CH, recording date, recording start time and recording finish time.

"Simple recording reservation" refers to a recording reservation mode in which a menu screen is output on which a plurality of regions with a predetermined shape are displayed in the form of a matrix with rows and columns and the regions are each correlated with any date and any time frame. A user can select a specific date and a specific time frame by selecting one of the regions with the predetermined shape. On the region with the predetermined shape selected by the user's operation on operation unit 2, the user can designate a CH to make a reservation for a recording.

A description is given below of a configuration of the menu screen in the recording reservation mode of the simple recording reservation of information recording and reproducing apparatus 100 according to the embodiment of the present invention.

When the menu screen is displayed, a plurality of regions with a predetermined shape that correspond respectively to predetermined dates in the past and those in the future are shown in the form of a matrix with rows and columns.

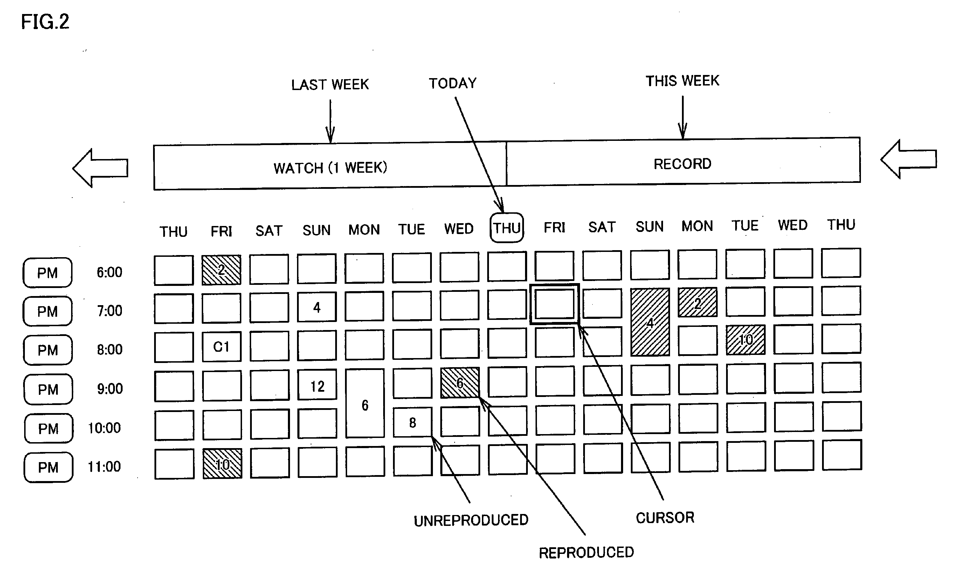

According to an operation signal effected by an instruction entered by a user, system control circuit 18 allows the menu screen of the simple recording reservation as shown in Fig. 2 to be displayed. On the menu screen, a plurality of rectangular regions correlated with respective days and respective times of the last week and this week are indicated. These rectangular regions are indicated in appropriate display colors according to respective states of programs for which recording reservations are made last week and this week. The shape of the regions correlated with respective days and times of the last week and this week is not particularly limited to the rectangle. For example, the regions may be in the shape of a square, rhombus, or circle.

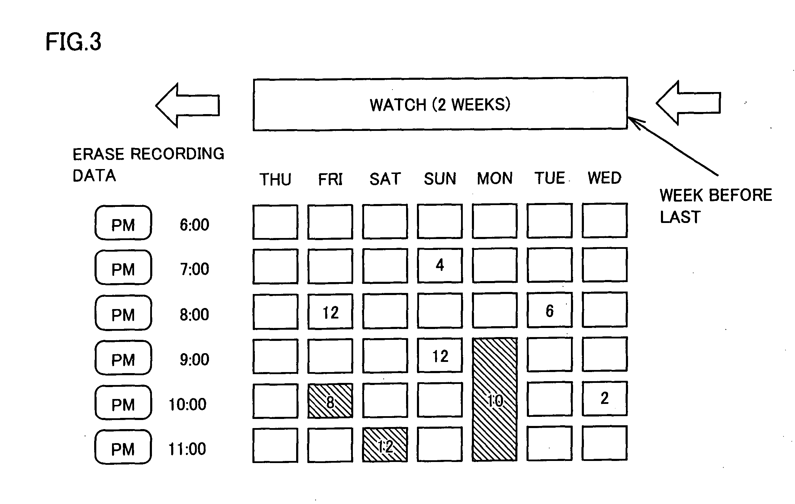

As shown in Fig. 3, according to a predetermined operation signal effected by a user, a plurality of rectangular regions correlated with respective days and times of the week before last are displayed. These rectangular regions are indicated in appropriate display colors according to respective states of programs for which recording reservations are made the week before last.

"Display colors according to respective states" refer to display colors changed depending on respective states of programs, namely a program having been recorded and still unreproduced, a program having been recorded and reproduced, a program to be recorded, and a program being recorded for example.

A description is given below of an operation of system control circuit 18 to display the menu screens shown in Figs. 2 and 3.

OSD image generating circuit 20 generates the menu screen of the simple recording reservation by displaying a plurality of rectangular regions in the form of a matrix with rows and columns. System control circuit 18 correlates respective columns of the rectangular regions arranged in the form of the matrix with respective days of the week. System control circuit 18 further correlates respective rows with respective times. Here, this operation of system control circuit 18 is not particularly limited to the correlation of the columns with respective days of the week. For example, system control circuit 18 may correlate the rows with respective days of the week and correlate the columns with respective times.

The times correlated with respective rows are those starting from a set time and arranged at predetermined time intervals. In other words, while the times correlated with respective rows are not particularly limited, the times may those from 6 p.m. to 12 midnight at intervals of one hour.

The days of the week correlated by system control circuit 18 with respective columns are those including today. For example, when the menu screen of the simple recording reservation as shown in Fig. 2 is displayed, system control circuit 18 correlates the day of the week corresponding to today with the central column on the menu screen. Then, with today specified as an origin, system control circuit 18 correlates the columns with appropriate days of the week before today and the week after today. Similarly, as shown in Fig. 3, system control circuit 18 correlates the rectangular regions on the menu screen for the week before last with respective days of the week and respective times. With the central column of the rectangular regions as shown in Fig. 2 specified as an origin, system control circuit 18 correlates the columns of the rectangular regions as shown in Fig. 3 with respective days of the week.

A description is given below of a method using a management table for correlating the rows and columns of a plurality of displayed rectangular regions with respective days of the week and respective times, as an exemplary method therefor.

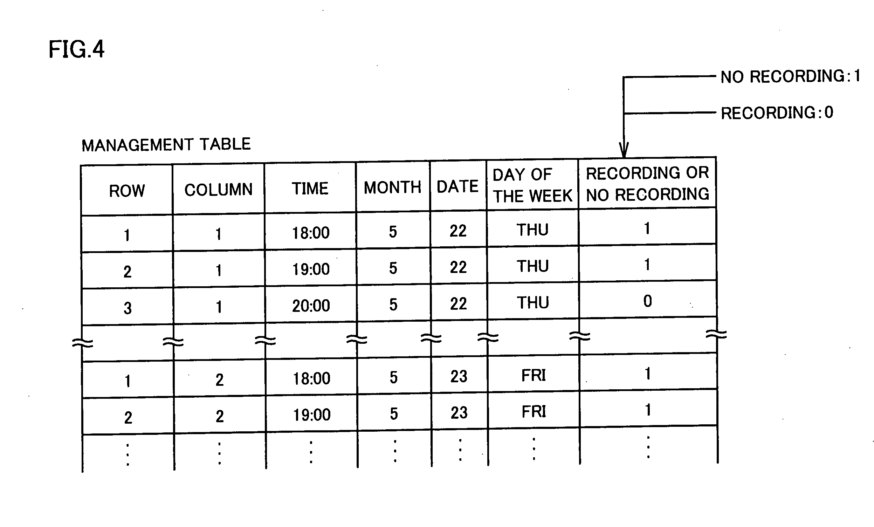

Referring to Fig. 4, system control circuit 18 correlates respective rows and columns of the rectangular regions displayed on the menu screen of the simple recording reservation with respective times and days of the week. System control circuit 18 generates or updates the management table at least after the date and time measured by timer 26 is changed and before the menu screen of the simple recording reservation is displayed. While the management table is not particularly limited to any form, the management table may be stored in memory 4, stored on hard disk device 10 on which moving image data is stored or on a detachable recording medium.

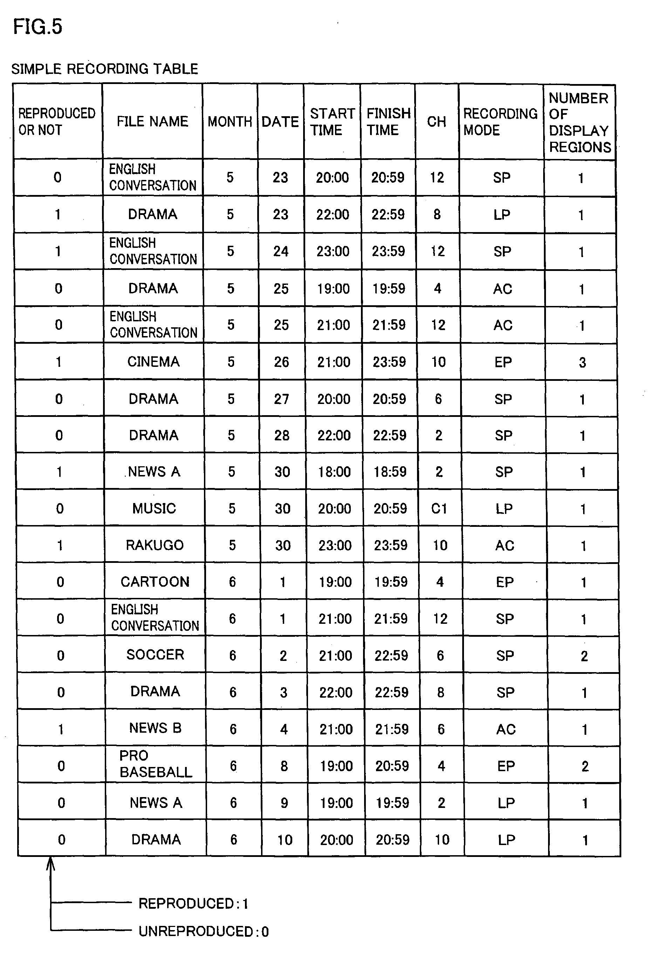

In generating the management table, system control circuit 18 correlates the column corresponding to the central column of the rectangular regions on the menu screen with the date of today measured by timer 26. With the central column as an origin, system control circuit 18 correlates other columns with appropriate dates. Based on information about the day of the week, system control circuit 18 adds days of the week corresponding to respective dates to the management table. The day information may be stored in memory 4 or stored on hard disk device 10. The management table includes a reservation flag indicating whether or not a reservation for a recording is made and the recording has been done or a reservation for a recording to be done is made for corresponding date and time frame, based on a simple recording table (as shown in Fig. 5) on which registered reservation data regarding recording reservations.

On the screen shown in Fig. 2, a user can move a cursor indicated on the menu screen of the simple recording reservation by operating operation unit 2 or a remote controller. When the cursor is to be moved, system control circuit 18 changes a variable indicative of the cursor position according to an operation signal for example from operation unit 2. According to the operation signal, OSD image generating circuit 20 re-displays the cursor so that the cursor is positioned as intended.

The user can accordingly select one of the rectangular regions by moving the cursor. Then, the user can make a recording reservation by selecting a certain day of the week and a certain time frame. For example, the user moves the cursor to a certain rectangular region among the regions correlated with today and the following days and designates a certain CH with operation unit 2 so that a reservation for a recording on the specified day of the week, time frame and CH is completed.

By making a recording reservation for a program of a certain day of the week, reservations for recordings of the program on the same day of the following weeks may be made at a time. Further, when the cursor is moved to a rectangular region corresponding to a recorded program or a program for which a recording reservation is made, system control circuit 18 may direct OSD image generating circuit 20 to display on a predetermined region of the screen such details as information about the recorded program or the program to be recorded.

As discussed in conjunction with Fig. 2, on the rectangular regions displayed in the form of the matrix, a program having been recorded and unreproduced, a program having been recorded and reproduced, a program to be recorded and a program being recorded are shown in different display colors together with indications of channels over two weeks including today, specifically a week before today and a week after today. Based on the simple recording table provided separately from the management table, OSD image generating circuit 20 changes the display color of a program in a certain time frame on a certain day of the week for which a recording reservation is made. System control circuit 18 refers to the reservation flag of the management table. When there is found a reservation for a recording having been made or a reservation for a recording to be made, system control circuit 18 then refers to the simple recording table. Based on the simple recording table referred to, OSD image generating circuit 20 changes the display color of the rectangular region where the recording reservation is made. Similarly, in order to display the recording status of the week before last according to a predetermined operation signal, system control circuit 18 refers to the reservation flag of the management table. When there is found a reservation for a recording having been made, system control circuit 18 refers to the simple recording table. Based on the simple recording table referred to, OSD image generating circuit 20 changes the display color of the rectangular region where the recording reservation is made.

When a program is being recorded, system control circuit 18 directs OSD image generating circuit 20 to indicate the rectangular region corresponding to the recorded program in flashing manner. In response to registration of reservation data on the simple recording table, OSD image generating circuit 20 may change the display color of a rectangular region corresponding to the reservation data.

Further, based on an instruction to reproduce that is effected by selecting a recorded program with the cursor moved by the user, system control circuit 18 may allow the selected recorded program to be reproduced.

As shown in Fig. 5, the simple recording table includes reservation data, namely information about recordings of programs for which reservations are made using the menu screen in the simple recording reservation mode. The reservation data includes reproduction flag indicating whether a program is reproduced or not, file name, date of recording, recording start time, recording finish time, CH of a program to be recorded, recording mode indicating the recording image quality when a program is recorded, and the number of rectangular regions corresponding to a program that are displayed on the menu screen (hereinafter referred to as the number of display regions). The simple recording table may be stored in memory 4, stored on hard disk device 10 on which moving image data is stored or stored on a detachable recording medium.

The reproduction flag indicates whether a recorded program has been reproduced or unreproduced. In response to an operation signal effected by an instruction to reproduce that is entered after a rectangular region corresponding to a recorded program is selected from a plurality of rectangular regions, system control circuit 18 overwrites the reproduction flag if the reproduction flag which indicates "unreproduced", i.e. "0". Namely, system control circuit 18 overwrites this flag "0" with "1".

When a recording reservation is to be made, system control circuit 18 generates the reservation data from the date and time corresponding to a rectangular region selected by a user as well as an entered CH. System control circuit 18 registers the generated reservation data on the recording table. System control circuit 18 sets each of the items of the reservation data except for the date, recording start time, recording finish time and CH to an initial value.

For example, the initial value of the number of display regions is "1". In other words, a user can select one of the rectangular regions and enter a CH to make a reservation for a recording on the hourly basis while the duration of the program to be recorded may be longer than one hour.

On the menu screen, a user can change information details of a program to be recorded in the registered reservation data. Based on the information changed by the user, system control circuit 18 changes the corresponding reservation data on the recording table. System control circuit 18 in changing the information details can change the recording finish time on the basis of time shorter than the time intervals of the rows. For example, if each row corresponds to one hour, system control circuit 18 may change the recording finish time on the basis of 15 minutes. Based on the changed recording start time and recording finish time, system control circuit 18 changes the number of display regions. For example, if the duration from the recording start time to the recording finish time is longer than one hour and is not longer than two hours, system control circuit 18 changes the number of display regions to 2.

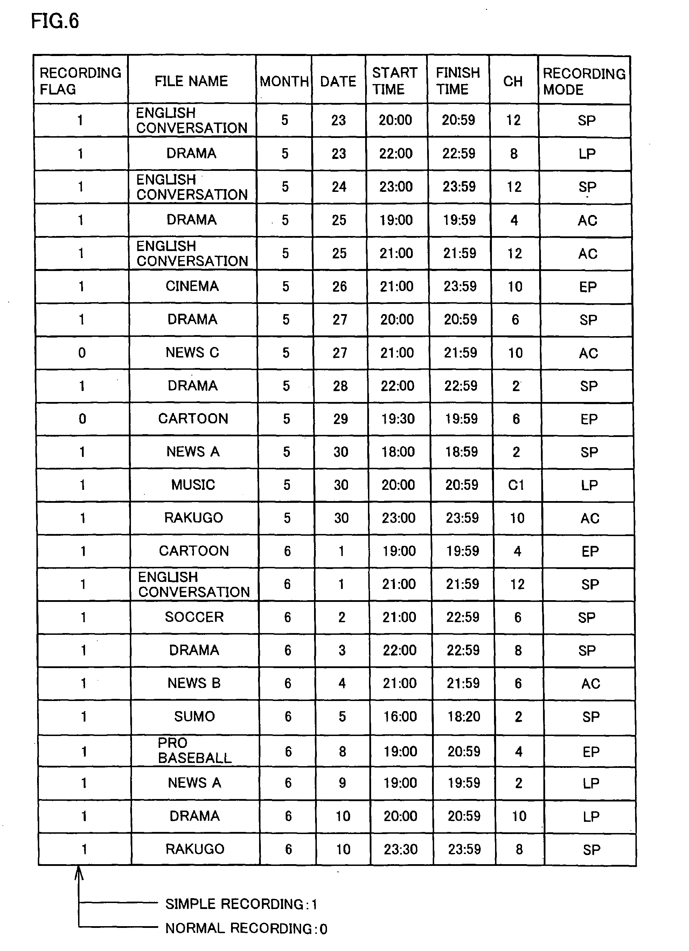

Referring to Fig. 6, in each of the simple recording reservation mode and the normal recording reservation mode, system control circuit 18 adds to a data table an appropriate recording flag indicating whether the reservation mode is the simple recording reservation mode or the normal recording reservation mode. A recording file recorded in the simple recording reservation mode is erased when a predetermined period of time has passed. Specifically, when the period of time from the recording date included in the reservation data to the date measured by timer 26 is equal to a predetermined period of time, system control circuit 18 erases the reservation data and the recording file corresponding to the reservation data. Here, the predetermined period of time is not particularly limited to a certain period and is two weeks for example. In searching for a recording file to be erased, system control circuit 18 refers to the recording flag. System control circuit 18 erases a recording file recorded two weeks ago, among recording files recorded in the simple recording reservation mode. When the date measured by timer 26 changes, system control circuit 18 erases reservation data for a recording for which a predetermined period of time has passed from the recording date as well as the recording file corresponding to the reservation data. The data table of recording files is not limited to a particular one, and the data table may be stored in memory 4, stored on a hard disk device 10 with moving image data stored thereon or stored on a detachable recording medium.

Regarding recording files recorded in the normal recording reservation mode, system control circuit 18 stores these recording files until an operation signal is provided in response to an instruction to erase entered by a user.

According to an operation signal provided for changing the recording flag of a recording file recorded in the simple recording reservation mode, system control circuit may keep the recording file until an operation signal is provided in response to an entered instruction to erase.

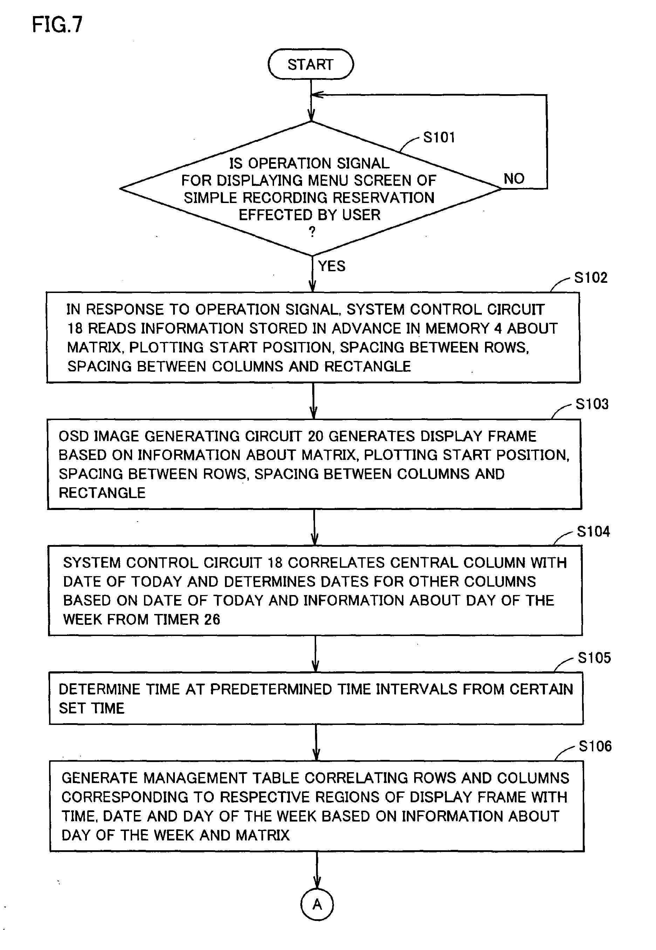

Figs. 7-9 show a flowchart of an operation of displaying the menu screen of the simple recording reservation in response to an operation signal effected by an instruction to display that is entered by a user.

Referring to Fig. 7, system control circuit 18 determines whether or not an operation signal is provided for displaying the menu screen of the simple recording reservation in response to operation of a user on operation unit 2 (step S101).

In step S 101, when the operation signal for displaying the menu screen of the simple recording reservation is not provided, system control circuit 18 continues to determine whether or not the operation signal for displaying the menu screen of the simple recording reservation is provided.

In step S101, when the operation signal for displaying the menu screen of the simple recording reservation is provided, system control circuit 18 reads such information about a plurality of rectangular regions to be displayed on the menu screen that is stored in advance in memory 4, as information about matrix, plotting start position, spacing between rows, spacing between columns, and rectangle (step S102).

Based on the information about matrix, plotting start position, spacing between rows, spacing between columns and rectangle, OSD image generating circuit 20 displays the rectangular regions on the menu screen (step S103).

Based on the date of today measured by timer 26 and information about the day of the week that is stored on hard disk device 10, system control circuit 18 correlates the central column of the matrix with today and determines other days corresponding to other columns respectively with the central column as an origin (step S104).

System control circuit 18 then determines, from a certain set time, respective times corresponding to the rows at predetermined time intervals (step S105).

In the above-described process, system control circuit 18 generates the management table correlating the rows and columns corresponding to the rectangular regions displayed on the menu screen with respective times, dates, and days of the week (step S106).

The part of the flowchart from step S104 to step S106 for generating the management table is not particularly limited to the generation thereof according to the operation signal for displaying the menu screen. For example, system control circuit 18 may update the management table in response to a change of the date by timer 26. Further, system control circuit 18 may update the management table when the time measured by timer 26 indicates a predetermined time.

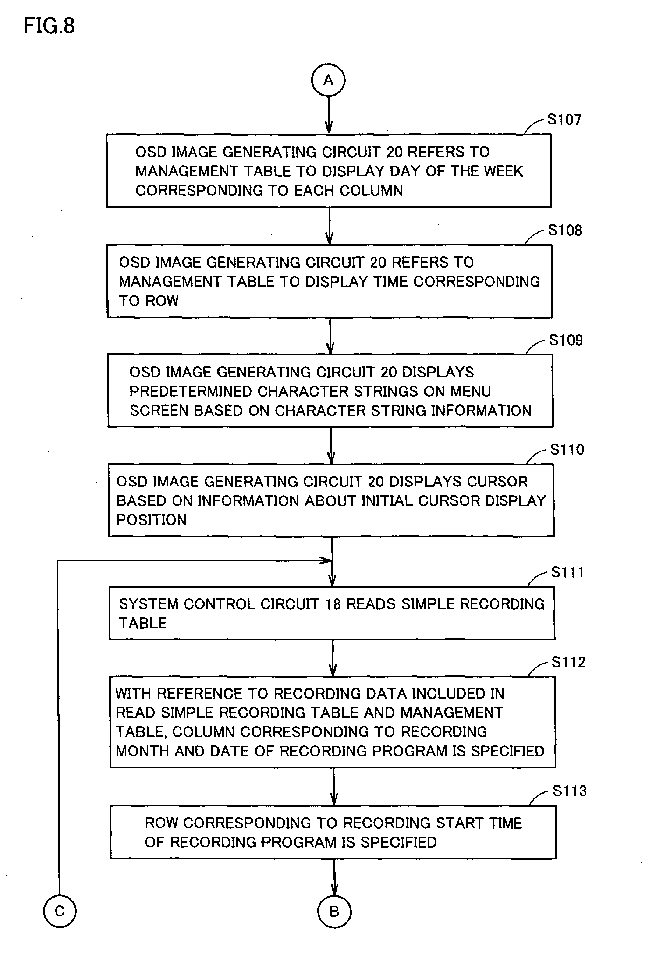

As shown in Fig. 8, OSD image generating circuit 20 refers to the management table to display the day of the week corresponding to each column of the rectangular regions displayed in the form of the matrix on the menu screen (step S107).

OSD image generating circuit 20 then refers to the management table to display the time corresponding to each row of the rectangular regions displayed in the form of the matrix on the menu screen (step S108).

Based on character string information, OSD image generating circuit 20 displays predetermined character strings on the menu screen (step S109).

Based on information about the initial position of the cursor, OSD image generating circuit 20 displays the cursor (step S 110).

The information about the character strings and about the cursor initial position may be stored in advance in memory 4 or stored in advance on hard disk device 10.

System control circuit 18 then reads the simple recording table (step S111).

System control circuit 18 refers to the management table and reservation data included in the read simple recording table to specify the column corresponding to the recording month and date of a program for which a reservation is made (step S 112).

System control circuit 18 then specifies the row corresponding to the recording start time of the program to be recorded (step S113).

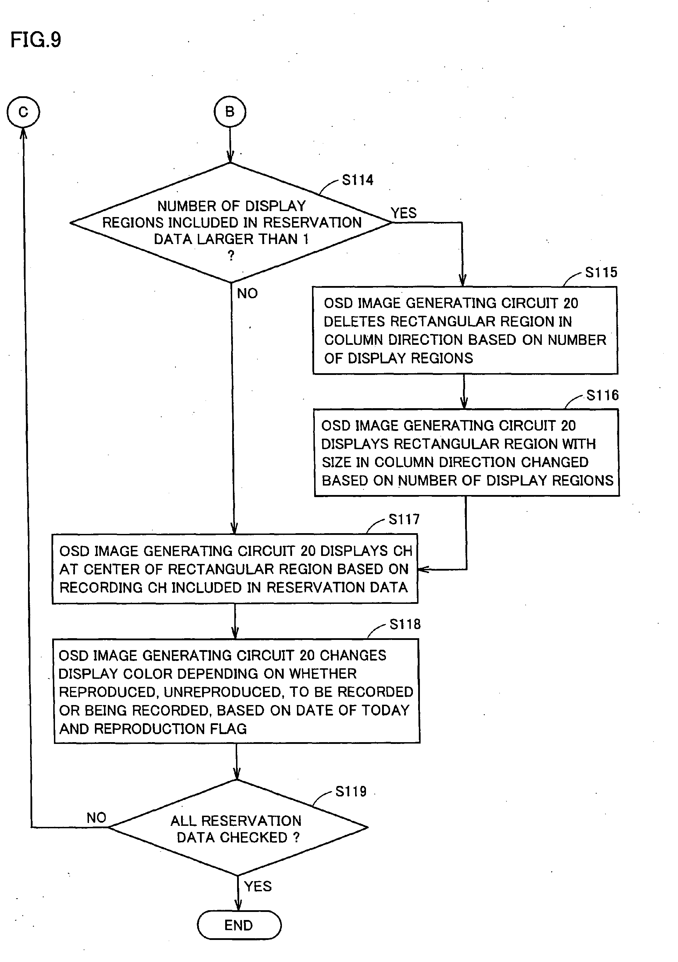

Referring to Fig. 9, system control circuit 18 determines whether or not the number of display regions included in the reservation data is larger than 1 (step S114).

In step S 114, when the number of display regions that is included in the reservation data is larger than 1, OSD image generating circuit 20 deletes certain rectangular region(s) in the column direction based on the number of display regions. For example, when the number of display regions included in the reservation data is 2, OSD image generating circuit 20 deletes the rectangular region immediately under the rectangular region in the column direction that corresponds to the referenced reservation data (step S115).

Based on the number of display regions included in the reservation data, OSD image generating circuit 20 generates a rectangular region with the size in the column direction changed (step S 116).

For example, when the number of display regions included in the reservation data is 2, OSD image generating circuit 20 displays a rectangular region having its size enlarged to match two rectangular regions in the column direction.

Based on a CH specified by the user that is included in the reservation data, OSD image generating circuit 20 displays the CH at the center of the rectangular region corresponding to the reservation data (step S 117).

In step S 114, when the number of display regions that is included in the reservation data is smaller than 1, system control circuit 18 proceeds to step S117.

Based on the date of today and the reproduction flag included in the reservation data and indicating whether or not the program has been reproduced, system control circuit 18 determines whether the program in the referenced reservation data has been reproduced, has been unreproduced, is to be recorded, or is being recorded. More specifically, when the program in the referenced reservation data is recorded before today and the recorded program has been reproduced, system control circuit 18 determines that the reservation data is for the reproduced program. When the program in the referenced reservation data is recorded before today and the recorded program has not been reproduced, system control circuit 18 determines that the reservation data is for the unreproduced program. When the program in the referenced reservation data is to be recorded today or after today, system control circuit 18 determines that the reservation data is for the program to be recorded. When the program in the referenced reservation data is now being recorded today, system control circuit 18 determines that the reservation data is for the program being recorded.

According to respective states of the program, namely according to whether the program has been reproduced, has been unreproduced, is to be recorded or is being recorded, OSD image generating circuit 20 changes the display color of the rectangular region corresponding to the reservation data (step S118).

System control circuit 18 then determines whether it has checked all the reservation data in the simple recording table (step S 119).

In step S 119, when all the reservation data in the recording table have not been checked, system control circuit 18 returns to step S111.

In step S 119, when all the reservation data in the recording table have been checked, system control circuit 18 ends the process.

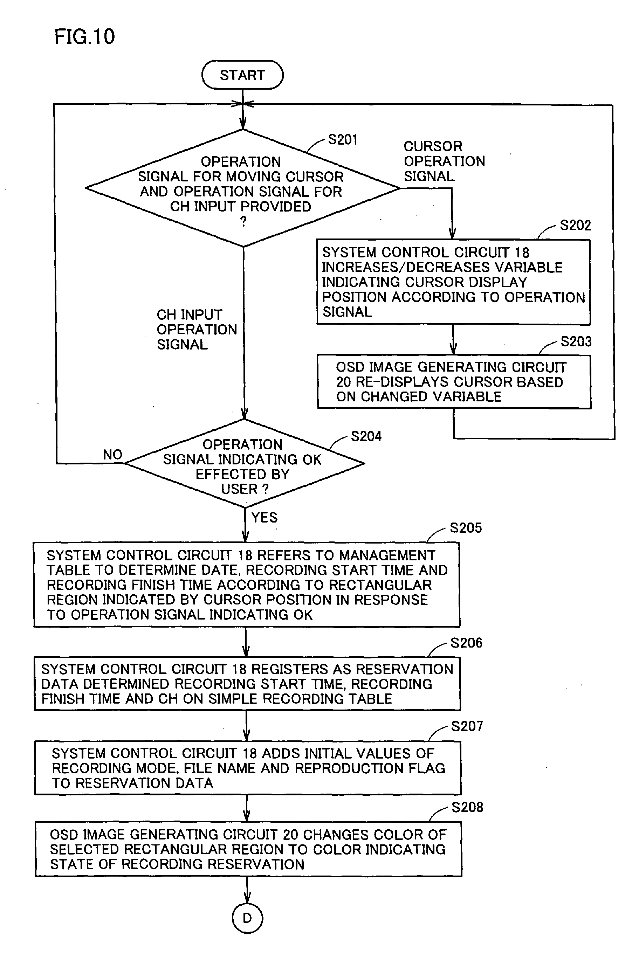

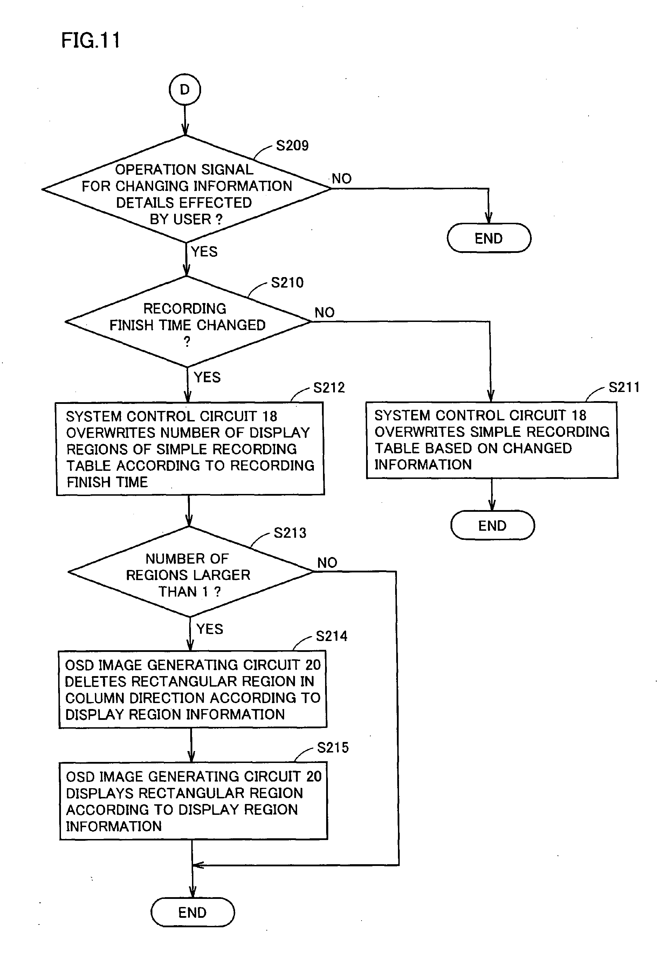

Figs. 10 and 11 show a flowchart of an operation of making a recording reservation with the menu screen of the simple recording reservation according to operation signals effected by a user.

Referring to Fig. 10, system control circuit 18 determines whether or not an operation signal for moving the cursor and an operation signal for CH input are provided in response to operation of the user (step S201).

According to the operation signal for moving the cursor in step S201, system control circuit 18 changes the variable representing the position of the cursor to be displayed (step S202).

Based on the changed variable, OSD image generating circuit 20 re-displays the cursor on the menu screen (step S203).

Then, system control circuit 18 returns to step S201.

According to the operation signal for CH input in step S201, system control circuit 18 determines whether or not an operation signal indicating user's "OK" is provided (step S204).

In step S204, when the operation signal indicating user's OK is not provided, system control circuit 18 returns to step S201.

When the operation signal indicating user's OK is provided in step S204, system control circuit 18 refers to the management table to find the date and time corresponding to the rectangular region indicated by the cursor position and determine the date, recording start time and recording finish time in response to the operation signal indicating user's OK (step S205).

Then, system control circuit 18 registers, on the simple recording table, the reference date, recording start time, recording finish time and the CH entered by the user, as reservation data (step S206).

System control circuit 18 adds, to the reservation data on the simple recording table, the recording mode, file name, reproduction flag and the initial value of the number of display regions (step S207).

OSD image generating circuit 20 changes the color of the selected rectangular region to the color corresponding to the state of the recording reservation (step S208).

Referring to Fig. 11, system control circuit 18 determines whether or not an operation signal for changing information details is provided in response to user's operation (step S209).

When the operation signal for changing information details is not effected by the user in step S209, system control circuit 18 ends the process.

When the operation signal for changing information details is effected by the user in step S209, system control circuit 18 determines whether the information details to be changed concern the recording finish time (step S210).

When the information details to be changed do not concern the recording finish time in step S210, system control circuit 18 overwrites the simple recording table based on the changed information (step S211).

When the information details to be changed concern the recording finish time in step S210, system control circuit 18 calculates the number of display regions from the recording finish time to overwrite the simple recording table (step S212).

Then, system control circuit 18 determines whether the number of display regions according to the changed recording finish time is larger than 1 (step S213).

When the number of display regions is not more than 1 in step S213, system control circuit 18 ends the process.

When the number of display regions is larger than 1 in step S213, OSD image generating circuit 20 deletes some rectangular region(s) in the column direction according to the number of display regions (step S214).

According to the number of display regions, OSD image generating circuit 20 changes the size in the column direction of the rectangular region and displays the resultant rectangular region (step S215).

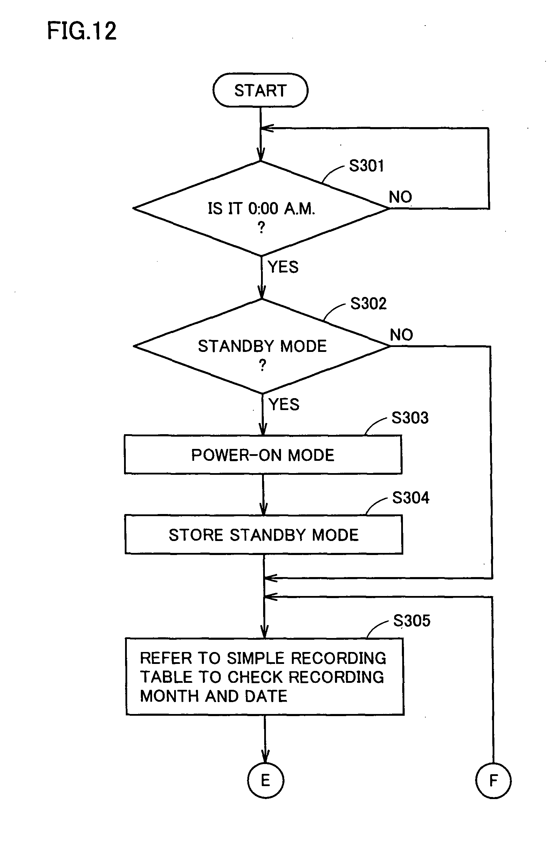

Fig. 12 shows a flowchart of an operation of erasing a recording file recorded two weeks ago, among recording files recorded in the simple recording reservation mode.

Referring to Fig. 12, system control circuit 18 determines whether the time measured by timer 16 is twelve midnight or not (step S301).

When the time measured by timer 26 is not twelve midnight in step S301, system control circuit 18 continues to make this determination until the measured time indicates twelve midnight.

When the time measured by timer 26 indicates twelve midnight in step S301, system control circuit 18 determines whether or not information recording and reproducing apparatus 100 is in a standby mode (step S302).

When information recording and reproducing apparatus 100 is in the standby mode in step S302, system control circuit 18 enters a power-on mode (step S303).

System control circuit 18 then stores in memory 4 information that the operation of erasing a recording file recorded two weeks ago that is in the standby mode is now activated (step S304).

Then, system control circuit 18 reads the simple recording table from hard disk device 10 to check the month and date of un-checked reservation data included in the simple recording table (step S305).

When information recording and reproducing apparatus 100 is not in the standby mode in step S302, system control circuit 18 proceeds to step S305.

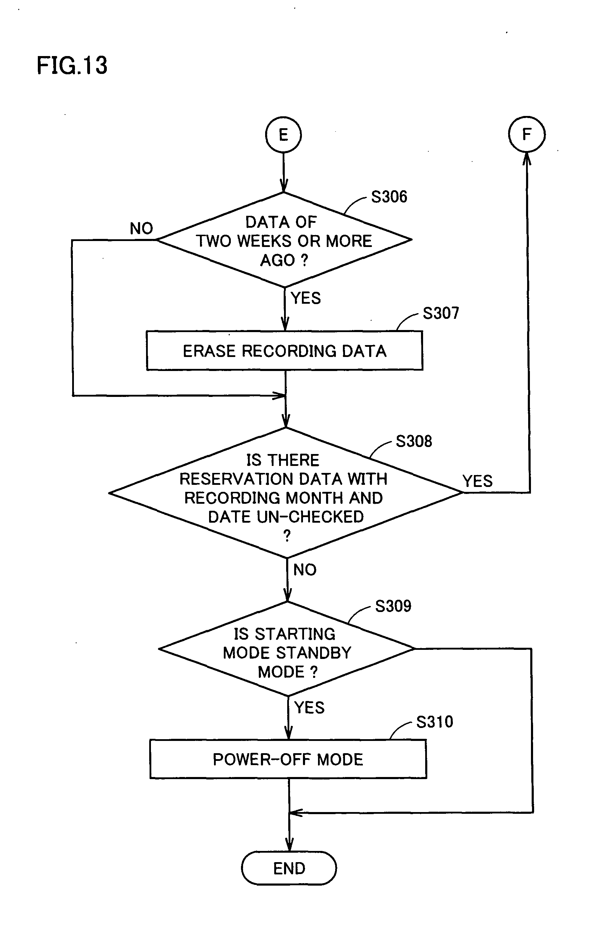

Referring to Fig. 13, system control circuit 18 determines whether or not the checked reservation data has a recording file recorded two weeks ago (step S306).

When the checked reservation data has the recording file recorded two weeks ago in step S306, system control circuit 18 erases the recording file of the reservation data stored on hard disk device 10 (step S307).

When the recording file included in the reservation data is not the one recorded two weeks ago, system control circuit 18 proceeds to step S308.

System control circuit 18 then determines whether or not there is any reservation data with its recording month and date un-checked (step S308).

When there is any reservation data with its recording month and date unchecked in step S308, system control circuit returns to step S305.

When there is no reservation data with its recording month and date unchecked in step S308, system control circuit 18 determines, based on information stored in memory 4, whether the operation of erasing the recording file recorded two weeks ago is started from the standby mode (step S309).

When the operation of erasing the recording file recorded two weeks ago is started from the standby mode in step S309, system control circuit 18 enters a power-off mode. In other words, system control circuit 18 allows information recording and reproducing apparatus 100 to enter the standby mode.

When the operation of erasing the recording file recorded two weeks ago is not started from the standby mode in step S309, system control circuit 18 ends the process.

As discussed above, according to the present invention, a plurality of rectangular regions correlated with respective dates and times are displayed on the menu screen in the recording reservation mode. Accordingly, a reservation for a recording of a program of a certain date, time and CH can easily be made according to selection of a certain rectangular region and input of the CH by a user.

The status of reservations for recordings of the last week and that of this week are indicated on the menu screen so that programs to be recorded in the future and programs having been recorded can be seen at a time.

By predetermined operation, the status of reservations for recordings of the week before last can be seen at a time, so that recording files recorded two weeks or less ago can be identified.

System control circuit 18 erases recording files recorded in the simple recording reservation mode a certain period of time ago (two weeks ago for example), so that the storage area of hard disk device 10 can effectively be used.

By changing the recording flag of a recording file recorded in the simple recording reservation mode, the recording file can be kept until a user enters an instruction to erase.

The rectangular regions on the menu screen are displayed in different display colors depending on whether the region corresponds to an unreproduced program, a reproduced program, a program to be recorded and a program being recorded, so that a user can readily know the state of a recorded program or a program to be recorded.

The embodiment of the present invention is not particularly limited to the operation of displaying the menu screen of the simple recording reservation as discussed in connection with Figs. 2 and 3 based on the management table discussed in connection with Fig. 4 and the simple recording table discussed in connection with Fig. 5. For example, system control circuit 18 may integrate the management table and the simple recording table described in connection with Figs. 4 and 5 respectively into one table. Further, based on the generated table, system control circuit 18 may allow the menu screen for the simple recording reservation described in connection with Figs. 2 and 3 to be displayed.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A data recording and reproducing apparatus comprising:
a receiving unit (6) receiving program data of a channel;
a storage unit (4, 10) storing information about a recording operation and a reproducing operation;
an input unit (2) receiving an externally input instruction;
a clock unit (26) measuring date and time; and
a control unit (16) controlling the recording operation and the reproducing operation,
said storage unit (4, 10) including. a circuit storing, in a predetermined operation mode, configurational information for configuring a display image of a plurality of regions in a predetermined shape displayed in a matrix form on a menu screen, and a recording table having reservation data registered thereon and
said control unit (16) including
a display image generating circuit (20) generating, in response to an input from said input unit (2), a signal for displaying said plurality of regions in the predetermined shape in the matrix form on said menu screen according to said configurational information, said plurality of regions being correlated with respective dates and times ranging from predetermined date and time in the past to predetermined date and time in the future,
a circuit (18) selecting, in said predetermined operation mode, in response to an input from said input unit (2), one of said plurality of regions in the predetermined shape on said menu screen;
a circuit (18) generating, in response to an input of a channel from said input unit (2), said reservation data according to said selected region in the predetermined shape so that said reservation data includes recording time and date correlated with said selected region in the predetermined shape, said input channel and program data of said channel, and registering the generated reservation data on said recording table,
a circuit (18) issuing an instruction to record, on said storage unit (4, 10), said program data of said input channel included in said reservation data when said measured date and time match said recording date and time included in said reservation data, and
a circuit (18) issuing, in said predetermined operation mode, in response to an input from said input unit (2), an instruction to reproduce from said storage unit (4, 10) said recorded program data included in said reservation data generated according to said selected region in the predetermined shape on said menu screen.

2. A data recording and reproducing apparatus (100) having recording reservation mode as an operation mode, comprising:
a receiving unit (6) receiving program data of a channel;
an input unit (2) receiving an externally input instruction;
a clock unit (26) measuring date and time;
a storage unit (4, 10) storing information about operation of said data recording and reproducing apparatus,
said storage unit (4, 10) including a circuit storing, in said recording reservation mode, configurational information for configuring a display image of a plurality of regions in a predetermined shape displayed in a matrix form on a menu screen, and a recording table having reservation data registered thereon; and
a control unit (16) controlling the operation of said data recording and reproducing apparatus,
said control unit (16) including
a display image generating circuit (20) generating, in response to an input from said input unit (2), a signal for displaying said plurality of regions in the predetermined shape in the matrix form on said menu screen according to said configurational information, said plurality of regions being correlated with respective dates and times,
a circuit (18) selecting, in said recording reservation mode, in response to an input from said input unit (2), one of said plurality of regions in the predetermined shape on said menu screen;
a circuit (18) generating, in response to an input of a channel from said input unit (2), said reservation data according to said selected region in the predetermined shape so that said reservation data includes recording time and date correlated with said selected region in the predetermined shape, said input channel and program data of said channel, and registering the generated reservation data on said recording table, and
a circuit (18) issuing an instruction to record, on said storage unit (4, 10), said program data received by said reception unit (6) when said date and time measured by said clock unit (26) match said recording date and time included in said reservation data.

3. The data recording and reproducing apparatus according to claim 2, wherein
said display image generating circuit (20) includes a circuit correlating columns or rows of the matrix of said plurality of regions in the predetermined shape with respective times starting from a set time at predetermined first time intervals, and
said control unit (16) further includes a circuit allowing, in response to an input from said input unit (2), a reservation to be set at predetermined second time intervals shorter than said predetermined first time intervals.

4. The data recording and reproducing apparatus according to claim 2, wherein
said storage unit (4, 10) includes
a first storage circuit (4) storing said configurational information and said recording table, and
a second storage circuit (10) storing said program data.

5. The data recording and reproducing apparatus according to claim 2, wherein
said dates and times correlated respectively with said plurality of regions in the predetermined shape include dates and times ranging from predetermined date and time in the past to predetermined date and time in the future, and
said control unit (16) further includes a reproduction circuit (18) reproducing, in response to an input from said input unit (2), said recorded program data included in said reservation data generated according to said selected region in the predetermined shape on said menu screen.

6. The data recording and reproducing apparatus according to claim 5, wherein
said control unit (16) further includes a circuit (18) erasing, when a predetermined time has passed from said recording date and time included in said reservation data to time and date measured by said clock unit (26), said reservation data and said program data included in said reservation data.

7. The data recording and reproducing apparatus according to claim 5, wherein
said reservation data includes a reproduction flag indicating whether or not reproduction is done, and
said control circuit (16) further includes
a circuit (18) changing, when said program data is reproduced by said reproduction circuit (18), said reproduction flag included in said reservation data including said reproduced program data, and
a circuit (18) changing, in said recording reservation mode, based on said date and time measured by said clock unit (26) and said reproduction flag, a display color of said region in the predetermined shape on said menu screen according to which said reservation data is generated.

8. The data recording and reproducing apparatus according to claim 5, wherein
said display image generating circuit includes a circuit (18) correlating a day of a week corresponding to said date and time measured by said clock unit (26) with one of a central row and a central column of said plurality of regions in the predetermined shape displayed in the matrix form.
